# EUROPÄISCHE PATENTSCHRIFT

(11) **EP 0 715 055 B1**
(45) Veröffentlichungstag und Bekanntmachung des Hinweises auf die Patenterteilung: **20.12.2000**
(21) Anmeldenummer: 95810487.9
(22) Anmeldetag: 26.07.1995
(51) Int. Cl.: E21B 10/58

(54) **Werkzeug mit Trägerkörper und Schneidkörper**
A tool with a holder and cutting element
Outil avec corps de base et élément de coupe

(30) Priorität: 28.11.1994 DE 4442266
(43) Veröffentlichungstag der Anmeldung: 05.06.1996
(73) Patentinhaber: HILTI Aktiengesellschaft, 9494 Schaan (LI)
(72) Erfinder: Kleine, Werner, D-28832 Achim (DE)
(74) Vertreter: Wildi, Roland

(56) Entgegenhaltungen:
- EP-A- 0 322 565
- EP-A- 0 353 214
- DE-A- 2 952 295
- DE-C- 671 959

## Beschreibung

Die Erfindung betrifft ein Bohr- und/oder Meisselwerkzeug, insbesondere zur Bearbeitung von Beton, Gestein, Mauerwerk und dergleichen Materialien mit einem Trägerkörper, der bearbeitungsseitig mit einem in einer Ausnehmung aufgenommenen Schneidkörper aus Hartmetall, Hartstoff oder dgl. versehen ist.

Bekannte Werkzeuge, die insbesondere der Bearbeitung von Beton, Gestein, Mauerwerk und dergleichen Materialien dienen, weisen einen rohr- oder zylinderförmigen Trägerkörper aus Stahl auf, welcher bearbeitungsseitig mit einem Schneidkörper aus einem härteren Material wie Hartmetall, Hartstoff und dergleichen versehen ist. Zur Bearbeitung der Materialien überragt der Schneidkörper den Trägerkörper bearbeitungsseitig zumindest axial und vielfach auch zusätzlich radial.

Die Werkzeuge können als reine Bohr- oder Meisselwerkzeuge ausgebildet sein oder sie können der Ausübung beider Funktionen dienen. Je nach Anwendungsfall sind die Trägerkörper unterschiedlich ausgebildet. Im Falle von Bohrwerkzeugen sowie Bohr- und Meisselwerkzeugen ist der Trägerkörper meistens mit einer Abfuhreinrichtung beispielsweise in Form einer Wendel für das abgebaute Material versehen. Solche Abfuhreinrichtungen, wie insbesondere Wendeln, entfallen bei reinen Meisselwerkzeugen.

Zudem können die Schneidkörper ebenfalls je nach Anwendungsfall verschiedenartige Formen aufweisen. Eine weit verbreitete Form ist die Ausbildung nach Art einer Schneidplatte. Für bestimmte Anwendungen finden jedoch auch weitere Formen Anwendung wie beispielsweise Kreuzschneiden, welche senkrecht zur Werkzeugachse gesehen, einen im wesentlichen kreuzförmigen Querschnitt aufweisen, wobei die Schenkel in unterschiedlichen Winkeln zueinander stehen können.

Allen Werkzeugen ist gemeinsam, dass die Trägerkörper Ausnehmungen für die formschlüssige Aufnahme der Schneidkörper besitzen. Diese Ausnehmungen sind auf die Form der Schneidkörper abgestimmt, d.h. beispielsweise bei Schneidplatten in Form von Schlitzen, welche das bearbeitungsseitige Ende des Trägerkörpers durchsetzen. Innerhalb dieser Ausnehmungen sind die Schneidkörper mittels Lötverbindungen befestigt.

Die völlig unterschiedlichen Beschaffenheiten der Materialien von Trägerkörper und Schneidkörper führen zu stark unterschiedlichem Wärmeausdehnungskoeffizienten dieser beiden Teile. Dies wirkt sich insbesondere beim Verlöten dieser Teile aus, indem es zu Spannungen kommt, welche mit zunehmender Grösse der zu verlötenden Flächen zunehmen. Diese Spannungen können einerseits zu Rissen in der Lötnaht führen und andererseits Beschädigungen der Schneidkörper zur Folge haben. Ein Ausfall der Werkzeuge durch Ablösen und Brechen der Schneidkörper wird dadurch hervorgerufen.

Dem vorgenannten Nachteil im Zusammenhang mit den entstehenden Spannungen kann allenfalls durch Dimensionierung der Schneidkörper einigermassen entgegengewirkt werden, indem Werkzeuge mit zunehmend grösseren Dimensionen mit Schneidkörpem von zunehmender Stärke bestückt werden.

Mit der erläuterten Massnahme können die genannten Nachteile allerdings nicht vollkommen beseitigt werden, wobei vor allem ins Gewicht fällt, dass weitere Nachteile neu geschaffen werden. Ein diesbezüglicher weiterer Nachteil besteht beispielsweise in der Schwächung des bearbeitungsseitigen Endes des Trägerkörpers durch grösser dimensionierte Ausnehmungen für die Schneidkörper. Herstellungstechnisch werden ebenfalls neue Nachteile geschaffen, indem für jede Werkzeugdimension eigens zugeschnittene Geräte zur Herstellung der Ausnehmung in den Trägerkörpem bereitzustellen sind. Ein ganz wesentlicher Nachteil ist jedoch wirtschaftlicher Natur, da der recht hohe Preis für das Material der Schneidkörper nicht ausser acht gelassen werden darf. Somit führt eine Anhebung der Stärke der Schneidkörper bei grösseren Dimensionen von Werkzeugen zu einer ganz erheblichen Verteuerung dieser Werkzeuge. Bei dieser Verteuerung ist zu beachten, dass der Preis für die Schneidkörper im Vergleich zum Anstieg des Materialbedarfes exponentiell zunimmt. Die doppelte Menge an Material hat damit nicht eine Verdoppelung, sondern eine Vervielfachung des Preises zur Folge.

Aus der DE-PS 401 188 ist ein Werkzeug mit grösserer Dimension bekannt, bei welchem nicht ein einziger durchgehender Schneidkörper Anwendung findet, sondern gleichmässig über den Durchmesser des Trägerkörpers verteilt mehrere Schneidkörper vorgesehen sind. Im Hinblick darauf, dass die aufgrund der unterschiedlichen Wärmeausdehnungskoeffizienten entstehenden Spannungen mit abnehmenden Flächen ebenfalls abnehmen, konnte die Stärke dieser einzelnen Schneidplatten geringer dimensioniert werden. Es wird somit in gewisser Weise aus der Sicht des Materialaufwandes für die Schneidkörper ein Vorteil erzielt. Dieser erzielte Vorteil hinsichtlich Materialaufwand geht jedoch im Hinblick auf den erhöhten Herstellungsaufwand dieses bekannten Werkzeuges wieder verloren, da bei der Herstellung nicht nur ein Schneidkörper, sondern mehrere Schneidkörper einzeln positioniert und festgelegt werden müssen.

Ein weiteres Werkzeug dessen Auslegung in eine ähnliche Richtung wie das vorgenannte geht, ist aus der DE-PS 671 959 bekannt. Dieses bekannte Werkzeug enthält zwei zueinander parallel verlaufende Ausnehmungen, die bearbeitungsseitig offen sind. In diesen Ausnehmungen sind jeweils drei einzelne Schneidkörper angeordnet. Senkrecht zu den Ausnehmungen weist das Werkzeug zudem Schlitze auf, welche entgegen der Bearbeitungsrichtung tiefer als die Ausnehmungen sind. In diesen Schlitzen sind Metallplättchen angeordnet, welche zwischen die einzelnen Schneidkörper ragen. Vor dem Lötvorgang sind demnach die einzelnen Schneidkörper und die Metallplättchen den Ausnehmungen beziehungsweise den Schlitzen separat zuzuführen.

Der Erfindung liegt die Aufgabe zugrunde, ein Werkzeug zu schaffen, welches sowohl aus der Sicht des Materialaufwandes als auch aus der Sicht der Bearbeitung wirtschaftlich herstellbar ist und zudem eine hohe Lebensdauer aufweist.

Erfindungsgemäss wird die Aufgabe bei einem Bohr- und/oder Meisselwerkzeug dadurch gelöst, dass der Schneidkörper einstückig ausgebildet ist und zur Unterteilung in einzelne Abschnitte, wenigstens eine Dehnfuge ausweist, die im wesentlichen entlang der parallel zur Werkzeugachse gemessenen Länge des Schneidkörpers verläuft.

Die erfindungsgemäss vorgesehenen Dehnfugen, welche beispielsweise im wesentlichen parallel zur Werkzeugachse verlaufen können, unterteilen den Schneidkörper in funktionelle Abschnitte, wobei sich jeder dieser Abschnitte wie ein einzelner Schneidkörper verhält. Betrachtungen hinsichtlich entstehender Spannungen sind demnach nur bezogen auf einen einzelnen Abschnitt anzustellen. Somit ist bei der Bemessung der Stärke des Schneidkörpers nicht die gesamte, senkrecht zur Werkzeugachse gemessene Breite des Schneidkörpers heranzuziehen, sondern nur die diesbezüglich gemessene Breite eines einzelnen Abschnittes. Die Stärke kann somit ganz erheblich verringert werden, was zu einer Verminderung des Materialaufwandes für den Schneidkörper führt. Eine ganz wesentliche Verbilligung des gesamten Schneidkörpers ist damit die Folge. Da die Dehnfuge eine Verbindung zwischen den einzelnen Abschnitten des Schneidkörpers vor Einsetzen in den Trägerkörper sicherstellt, ist eine Bestückung, wie mit einem üblichen einstückigen Schneidkörper möglich. Ein Mehraufwand bei der Herstellung der diesbezüglichen Werkzeuge entsteht dadurch nicht.

Herstellungstechnisch entsteht darüber hinaus der Vorteil, dass die Ausnehmungen für die Schneidkörper selbst bei unterschiedlichen Dimensionen von Werkzeugen immer gleich ausfallen, da die Wahl einer Einheitsstärke für die Schneidkörper möglich ist. Die einheitliche Dimension der Ausnehmungen für die Schneidkörper fällt zudem wesentlich geringer aus, so dass die bei grösseren Dimensionen von Werkzeugen nachteilige Schwächung des bearbeitungsseitigen Endes des Trägerkörpers dahinfällt.

Der Schneidkörper ist vor der Befestigung im Trägerkörper, dh insbesondere bei seiner für die Bestückung notwendigen Positionierung, als einteiliges Gebilde zu betrachten, welches funktionstechnisch nach erfolgter Befestigung im Trägerkörper mittels Verlötung in einzelne Abschnitte zerfällt. Die erfindungsgemässe Dehnfuge hat somit nach erfolgter Befestigung des Schneidkörpers im Trägerkörper keine aktive Funktion mehr, sondern trägt im Gegensatz dazu bei, funktionstechnisch den Schneidkörper in einzelne Abschnitte zu unterteilen.

In bevorzugter Weise wird die Dehnfuge von einer Materialverjüngung im Schneidkörper mit wenigstens einem verbleibenden Materialsteg gebildet. Dabei ist die Materialverjüngung zweckmässigerweise derart ausgebildet, dass der verbleibende Materialsteg in der Mitte der Stärke des Schneidkörpers zu liegen kommt. Die Kontur der Materialverjüngung kann verschiedenartig ausgebildet sein. So kann der Uebergang von den Seitenflächen zur Dehnfuge unter einem rechten oder unter einem stumpfen Winkel verlaufen. Im letzteren Falle bildet sich somit insgesamt eine sich V-förmig öffnende Kontur der Materialverjüngung zu beiden Seitenflächen des Schneidkörpers hin.

Die Ausbildung der Dehnfuge als Materialverjüngung schafft weiter den Vorteil, dass ein Reservoir für die Aufnahme des Lotes geschaffen wird, welches für die Verbindung des Schneidkörpers mit dem Trägerkörper benötigt wird. Damit können weitere wesentliche, bisher bekannte Nachteile beseitigt werden, welche vor allem darin bestanden, dass zu wenig Raum für Lot zur Verfügung stand und damit nur ungenügende Verbindungen erzielt werden konnten.

Die Funktion der Dehnfuge als Lotreservoir kann im wesentlichen in zwei Wegen ausgenutzt werden. Zum einen kann die Dehnfuge schon vom Hersteller der Schneidkörper mit Lot verfüllt werden, so dass Schneidkörper und Lot eine fertige Einheit bilden. Es entstehen dadurch bei der Herstellung der Werkzeuge weitere Vereinfachungen. Zum anderen kann das Lot erst bei der Herstellung der Werkzeuge den Dehnfugen zugeführt werden, was zur Folge hat, dass gegenüber dem bisherigen Verfahren die Positionierung des Lots vereinfacht wird.

Der Materialsteg kann entlang der parallel zur Werkzeugachse gemessenen Länge des Schneidkörpers durchgehend oder unterbrochen angeordnet sein. Im Falle eines durchgehenden Materialsteges verläuft dieser vorzugsweise im wesentlichen entlang der gesamten, parallel zur Werkzeugachse gemessenen Länge des Schneidkörpers. Im Falle eines unterbrochenen Materialsteges können mehrere verbleibende Materialstege entlang der parallel zur Werkzeugachse gemessenen Länge verteilt sein, beispielsweise zwei, jeweils je einen im Bereich der jeweiligen Enden des Schneidkörpers.

Zur Sicherstellung der an die Dehnfuge gestellten Eigenschaften entspricht vorzugsweise die senkrecht zur Werkzeugachse gemessene Dicke der Materialstege etwa dem 0,1- bis 0,5-fachen der senkrecht zur Werkzeugachse gemessenen Stärke des Schneidkörpers. Diesbezüglich dimensionierte Materialstege führen zu einer funktionstechnischen Abkoppelung der einzelnen Abschnitte voneinander und somit zu einer Aufteilung des gesamten Schneidkörpers in einzelne Funktionseinheiten.

Vorzugsweise sind mehrere Dehnfugen vorgesehen, welche die senkrecht zur Werkzeugachse gemessene Breite des Schneidkörpers in etwa gleichmässige Abschnitte unterteilen. So können in bevorzugter Weise zwei Dehnfugen vorgesehen sein, welche zu drei Abschnitten führen. Im Falle von drei Abschnitten weist zweckmässigerweise der mittlere Abschnitt eine Zentrierspitze auf.

Die erfindungsgemässe Anordnung der Dehnfugen erlaubt eine unterschiedliche, insbesondere anwendungsbezogene Ausgestaltung der Schneidkörper. So können die Schneidkörper beispielsweise eine bearbeitungsseitige Schneidkante aufweisen, welche in an sich bekannter Weise unter einem stumpfen Winkel zu einer Zentrierspitze zusammenläuft. Es handelt sich damit um eine übliche, an sich bekannte Dimensionierung der Schneidkörper, allerdings versehen mit den erfindungsgemässen Dehnfugen.

In Weiterbildung der Erfindung können die Dehnfugen als wesentliche Basis zur besonderen Ausgestaltung des Schneidkörpers benutzt werden. So bietet sich die Möglichkeit, Schneidkörper mit sehr aggressiven Formen von Schneidkanten zu bilden.

Die bearbeitungsseitige Schneidkante kann in einer bevorzugten Ausführungsform derart verlaufen, dass die unmittelbar den Dehnfugen benachbarten Bereiche in einem Winkel zueinander stehen und somit keinen gleichgerichteten Uebergang von einer Seite der Dehnfuge zur anderen Seite bilden. In bezug auf die Werkzeugachse verlaufen die den Dehnfugen unmittelbar benachbarten Bereiche der bearbeitungsseitigen Schneidkante damit in einem Winkel, welcher gemäss einer weiteren bevorzugten Ausführungsform stumpf ausgebildet sein kann.

Zur Bildung einer aggressiven Form kann der Schneidkörper auch derart ausgebildet sein, dass zweckmässigerweise die bearbeitungsseitige Schneidkante im Bereich der Dehnfugen abgesetzt ist.

Beispielsweise besteht die Möglichkeit, die bearbeitungsseitige Schneidkante durch axiale Stufen im Bereich der Dehnfuge abzusetzen. Eine solche Ausgestaltung verbessert die Zentrierung des Werkzeuges durch eine besonders betonte Zentrierspitze.

Eine weitere Möglichkeit besteht darin, die bearbeitungsseitige Schneidkante unter Bildung gegenläufiger Winkel im Bereich der Dehnfugen abzusetzen. Dabei können die Neigungen der Winkel beliebig variiert werden, wobei es sich zudem anbietet, die äusseren Bereiche der Schneidkörper ebenfalls mit einer Spitze durch zusammenlaufende Schneidkanten zu versehen.

Im Rahmen der Herstellung wirtschaftlicher Werkzeuge ist vorzugsweise der Schneidkörper als Schneidplatte ausgebildet.

Insbesondere im Zusammenhang mit Werkzeugen grösserer Dimensionen oder Werkzeugen für höhere Anforderungen ist zweckmässigerweise der Schneidkörper als Kreuzschneide ausgebildet.

Im Hinblick darauf, dass die erfindungsgemässen Dehnfugen beispielsweise bei der Herstellung der Schneidkörper mittels Sintem in gewisser Weise eine Diffusionssperre darstellen, besteht die Möglichkeit, den durch die Dehnfugen abgetrennten Bereichen eine unterschiedliche Materialbeschaffenheit zu verleihen. Es kann damit ein Schneidkörper geschaffen werden, dessen Materialbeschaffenheit dem jeweiligen Anwendungsfall entspricht. So bietet es sich beispielsweise an, den äusseren Abschnitten des Schneidkörpers eine hohe Härte zu verleihen, während beim zentralen Abschnitt eine hohe Zähigkeit im Vordergrund steht. Dies kann beispielsweise bei der Herstellung mittels Sinterung durch entsprechende Legierungszusätze erreicht werden.

Die Erfindung wird nachstehend anhand einiger Beispiele näher erläutert. Es zeigen:
- Fig. 1: ein Werkzeug gemäss Erfindung mit Trägerkörper und Schneidkörper
- Fig. 2: den Schneidkörper gemäss Fig. 1 in Ansicht;
- Fig. 2a: den Schneidkörper der Fig. 2 in Draufsicht;
- Fig. 2b: das Detail A der Fig. 2 in vergrösserter Darstellung;
- Fig. 2c: das Detail B der Fig. 2a in vergrösserter Darstellung;
- Fig. 3: eine weitere Ausführungsform eines Schneidkörpers in Ansicht;
- Fig. 3a: den Schneidkörper der Fig. 3 in Draufsicht;
- Fig. 3b: das Detail C der Fig. 3 in vergrösserter Darstellung;
- Fig. 3c: das Detail D der Fig. 3a in vergrösserter Darstellung;
- Fig. 4 bis 11a: weitere Ausführungsformen von Schneidkörpern.

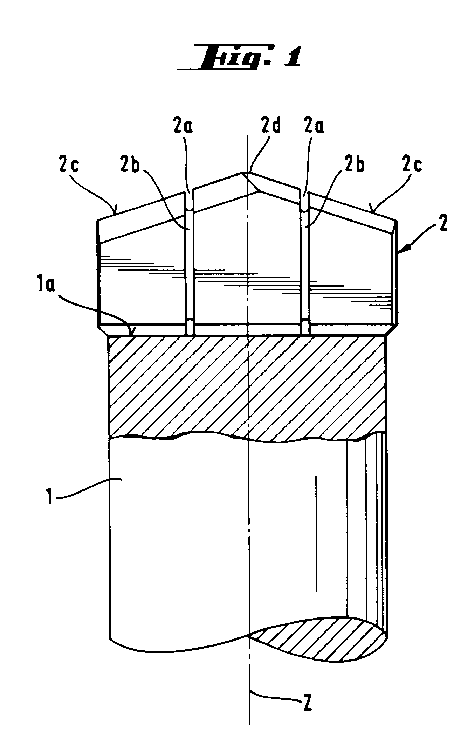

Das in Fig. 1 gezeigte Werkzeug weist einen Trägerkörper 1 und einen Schneidkörper 2 auf. Der Schneidkörper 2 ist in einer Ausnehmung 1a des Trägerkörpers 1 formschlüssig aufgenommen. Der Schneidkörper 2 weist zwei parallel zur Werkzeugachse Z verlaufende Dehnfugen 2a auf, welche in Form von Materialverjüngungen mit verbleibendem Materialsteg 2b gebildet sind. Bearbeitungsseitig weist der Schneidkörper 2 eine Schneidkante 2c auf, die unter einem stumpfen Winkel zu einer Zentrierspitze 2d zusammenläuft und beidseits der Dehnfugen 2a gleichgerichtet ist. Wie die Fig. 1 verdeutlicht, unterteilt sich die Breite des Schneidkörpers 2 aufgrund der Dehnfugen 2a in drei Abschnitte.

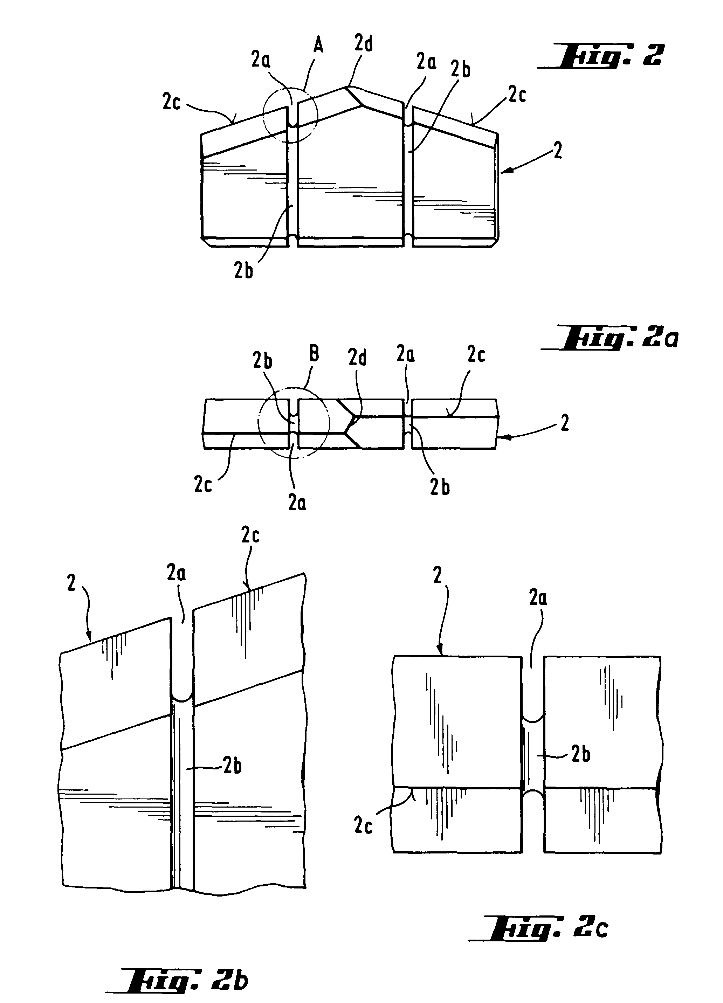

Die Fig. 2, 2a, 2b und 2c zeigen ohne Trägerkörper 1 nochmals den Schneidkörper 2 der Fig. 1, der wiederum Dehnfugen 2a mit verbleibenden Stegen 2b sowie eine Schneidkante 2c zur Bildung einer Zentrierspitze 2d aufweist. In der vergrösserten Darstellung gemäss Fig. 2b ist der Steg 2b der Dehnfuge 2a weiter verdeutlicht. Darüber hinaus ist der Draufsicht gemäss Fig. 2a zu entnehmen, wie der Steg 2b der Dehnfuge 2a etwa mittig bezüglich der Stärke des Schneidkörpers 2 angeordnet ist, was in der vergrösserten Darstellung gemäss Fig. 2c weiter verdeutlicht ist.

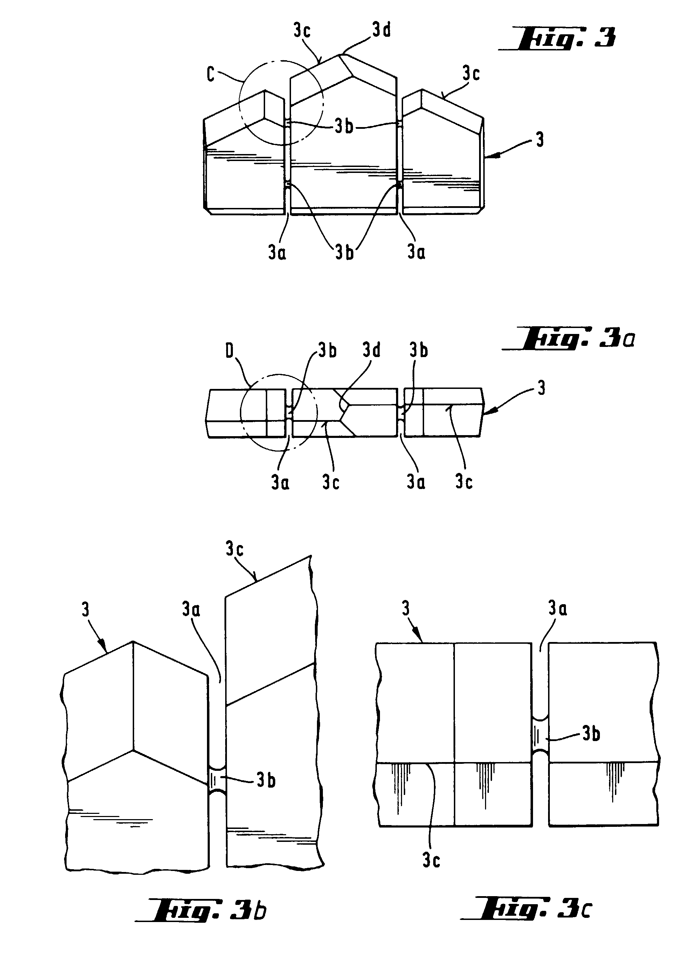

Die Fig. 3 zeigt einen Schneidkörper 3 mit Dehnfugen 3a mit beispielsweise zwei verbleibenden Materialstegen 3b. Eine Schneidkante 3c verläuft unter stumpfem Winkel und bildet eine Zentrierspitze 3d, wobei die Schneidkante 3c im Bereich der Dehnfugen 3a in einem Winkel zueinander stehende benachbarte Bereiche aufweist.

Die Fig. 3b zeigt in vergrösserter Darstellung den einen Materialsteg 3b einer Dehnfuge 3a. Aus der Fig. 3a ist die mittige Anordnung der Materialstege 3b bezüglich der Stärke des Schneidkörpers 3 ersichtlich, was in der vergrösserten Darstellung gemäss Fig. 3c weiter verdeutlicht ist.

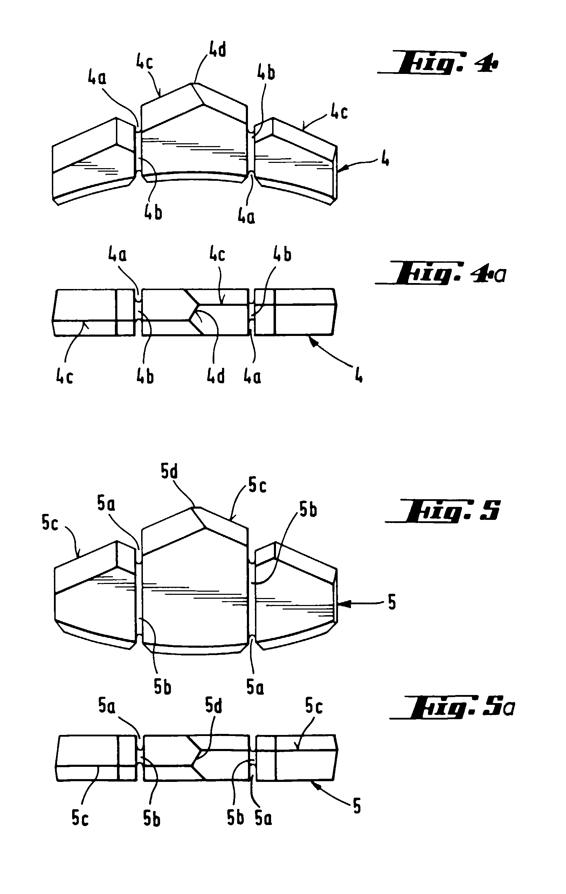

Die Fig. 4 und 4a zeigen einen Schneidkörper 4 mit zwei Dehnfugen 4a und verbleibenden Materialstegen 4b. Eine Schneidkante 4c verläuft unter einem stumpfen Winkel und bildet eine Zentrierspitze 4d. Wie insbesondere die Fig. 4 zeigt, ist der Rücken 4e des Schneidkörpers 4 konkav gebogen.

Die Fig. 5 und 5a zeigen einen Schneidkörper 5 mit zwei Dehnfugen 5a und verbleibenden Materialstegen 5b. Eine Schneidkante 5c verläuft unter einem stumpfen Winkel und bildet eine Zentrierspitze 5d. Der Rücken des Schneidkörpers 5 ist konvex gebogen.

Die den Dehnfugen 3a, 4a, 5a unmittelbar benachbarten Bereiche der Schneidkante 3c, 4c, 5c des Schneidkörpers 3, 4, 5 stehen in einem Winkel zueinander, wie dies die Fig. 3 bis 5 zeigen. In den dargestellten Beispielen verlaufen die den Dehnfugen 3a, 4a, 5a unmittelbar benachbarten Bereiche der Schneidkante 3c, 4c, 5c zudem unter einem stumpfen Winkel zur Werkzeugachse.

Der Vorteil der gebogenen Rückenausbildungen der Schneidkörper 4, 5 gemäss den Fig. 4 und 5 liegt in der Zentrierung zur Ausrichtung zwischen Trägerkörper und Schneidkörper 4, 5. Dies wirkt sich sowohl bei der Herstellung als auch beim Einsatz der Werkzeuge aus. Bei der Herstellung wird insbesondere die Ausrichtung vor dem Lötvorgang erleichtert. Beim Einsatz der Werkzeuge entstehen zentrisch gerichtete Kraftkomponenten, welche die Scherbeanspruchung der Lötnaht vermindern.

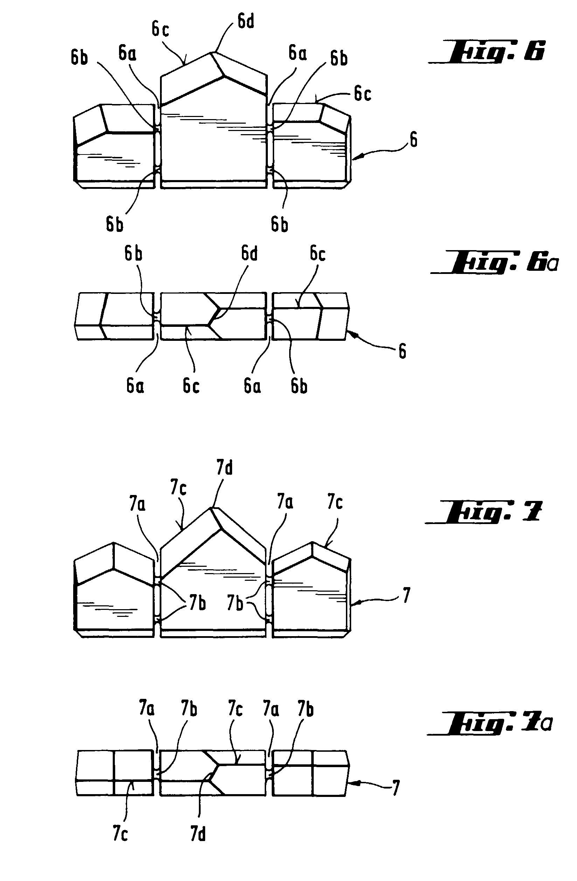

Die Fig. 6 und 6a zeigen einen Schneidkörper 6 mit zwei Dehnfugen 6a und verbleibenden Materialstegen 6b. Eine Schneidkante 6c ist durch axiale Stufen im Bereich der Dehnfugen 6a derart abgesetzt, dass sich eine Zentrierspitze 6d bildet.

Der in den Fig. 7 und 7a gezeigte Schneidkörper 7 weist zwei Dehnfugen 7a mit Materialstegen 7b auf. Eine Schneidkante 7c ist unter Bildung gegenläufiger Winkel im Bereich der Dehnfugen 7a abgesetzt, wobei sich eine Zentrierspitze 7d bildet.

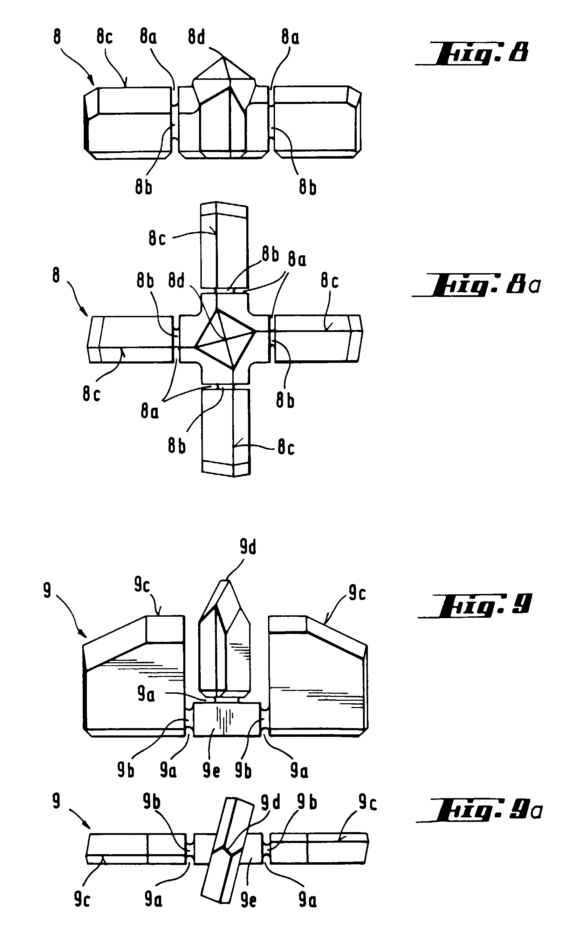

Der Schneidkörper 8 gemäss den Fig. 8 und 8a ist als Kreuzschneide ausgebildet. Vier Dehnfugen 8a mit Materialstegen 8b unterteilen den Schneidkörper 8 in vier Schenkel 8c und eine Zentrierspitze 8d.

Der Schneidkörper 9 gemäss den Fig. 9 und 9a weist Dehnfugen 9a mit Materialstegen 9b zwischen Schenkeln 9c und einem Basisteil 9e auf. Am Basisteil 9e ist eine Zentrierspitze 9d angeordnet.

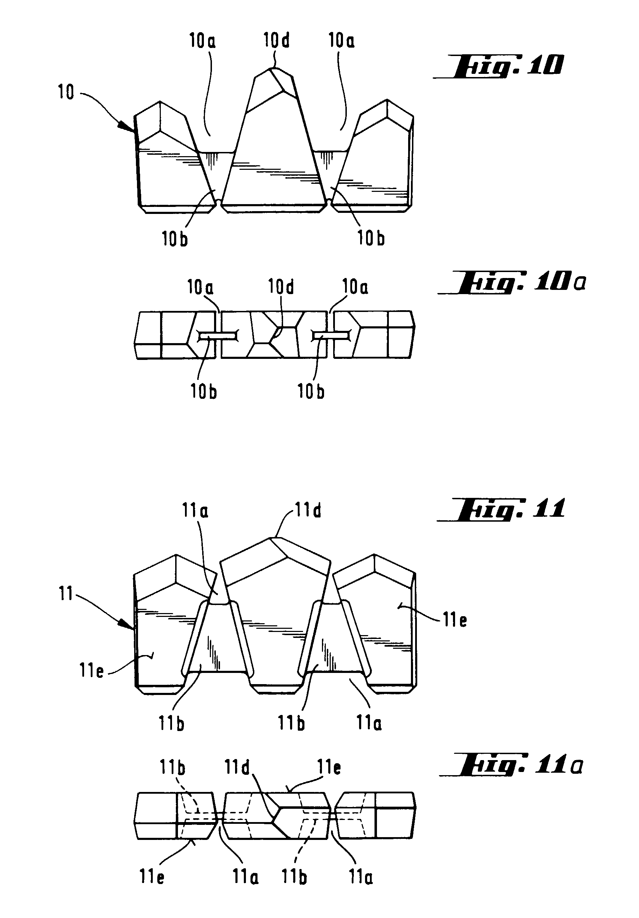

Die Fig. 10, 10a, 11 und 11a zeigen Schneidkörper10, 11 mit Dehnfugen 10a, 11a, die besonders betonte Materialstege 10b, 11b aufweisen. Beim Schneidkörper 10 gemäss Fig. 10 verjüngen sich die zwischen den Dehnfugen 10a verbleibenden Abschnitte in Bearbeitungsrichtung innerhalb der Körperebene. Beim Schneidkörper 11 der Fig. 11 erweitem sich die zwischen den Dehnfugen 11a verbleibenden Abschnitte in Bearbeitungsrichtung innerhalb der Körperebene. Wie die Fig. 11a ferner zeigt, erfolgt beim Schneidkörper 11 der Uebergang von den Seitenflächen 11e zu den Dehnfugen 11a unter einem stumpfen Winkel. Damit öffnen sich die Dehnfugen 11 a zu beiden Seitenflächen 11e hin V-förmig. Der mittlere Abschnitt der Schneidkörper 10, 11 weist eine Zentrierspitze 10d, 11d auf.

## Patentansprüche

1. Bohr- und/oder Meisselwerkzeug, insbesondere zur Bearbeitung von Beton, Gestein, Mauerwerk und dergleichen Materialien mit einem Trägerkörper (1), der bearbeitungsseitig mit einem in einer Ausnehmung (1a) aufgenommenen Schneidkörper (2, 3, 4, 5, 6, 7, 8, 9, 10, 11) aus Hartmetall, Hartstoff oder dergleichen versehen ist, **dadurch gekennzeichnet,** dass der Schneidkörper (2, 3, 4, 5, 6, 7, 8, 9, 10, 11) einstückig ausgebildet ist und zur Unterteilung in einzelne Abschnitte wenigstens eine Dehnfuge (2a, 3a, 4a, 5a, 6a, 7a, 8a, 9a, 10a, 11a) aufweist, die im wesentlichen entlang der parallel zur Werkzeugachse (Z) gemessenen Länge des Schneidkörpers (2, 3, 4, 5, 6, 7, 8, 9, 10, 11) verläuft.

2. Werkzeug nach Anspruch 1, dadurch gekennzeichnet, dass die Dehnfuge (2a, 3a, 4a, 5a, 6a, 7a, 8a, 9a, 10a, 11a) von einer Materialverjüngung mit wenigstens einem verbleibenden Materialsteg (2b, 3b, 4b, 5b, 6b, 7b, 8b, 9b, 10b, 11b) gebildet ist.

3. Werkzeug nach Anspruch 2, dadurch gekennzeichnet, dass ein im wesentlichen entlang der parallel zur Werkzeugachse (Z) gemessenen Länge des Schneidkörpers (2) verlaufender Materialsteg (2b) vorhanden ist.

4. Werkzeug nach Anspruch 2, dadurch gekennzeichnet, dass wenigstens zwei entlang der parallel zur Werkzeugachse (Z) gemessenen Länge des Schneidkörpers (3) verteilte Materialstege (3b) vorhanden sind.

5. Werkzeug nach einem der Ansprüche 2 bis 4, dadurch gekennzeichnet, dass die senkrecht zur Werkzeugachse (Z) gemessene Dicke der Materialstege (2b, 3b, 4b, 5b, 6b, 7b, 8b, 9b, 10b, 11b) etwa dem 0,1- bis 0,5-fachen der senkrecht zur Werkzeugachse (Z) gemessenen Stärke des Schneidkörpers (2, 3, 4, 5, 6, 7, 8, 9, 10, 11) entspricht.

6. Werkzeug nach einem der Ansprüche 1 bis 5, dadurch gekennzeichnet, dass mehrere Dehnfugen (2a, 3a, 4a, 5a, 6a, 7a, 10a, 11a) vorgesehen sind, welche die senkrecht zur Werkzeugachse (Z) gemessene Breite des Schneidkörpers (2, 3, 4, 5, 6, 7, 10,11) in etwa gleichmässige Abschnitte unterteilen.

7. Werkzeug nach Anspruch 6, dadurch gekennzeichnet, dass zwei Dehnfugen (2a, 3a, 4a, 5a, 6a, 7a, 10a, 11a) zur Bildung von drei Abschnitten vorgesehen sind.

8. Werkzeug nach Anspruch 7, dadurch gekennzeichnet, dass der mittlere Abschnitt eine Zentrierspitze (2d, 3d, 4d, 5d, 6d, 7d, 10d, 11d) aufweist.

9. Werkzeug nach einem der Ansprüche 1 bis 8, dadurch gekennzeichnet, dass der Schneidkörper (2, 3, 4, 5, 6, 7) eine unter einem stumpfen Winkel zu einer Zentrierspitze (2d, 3d, 4d, 5d, 6d, 7d) zulaufende bearbeitungsseitige Schneidkante (2c, 3c, 4c, 5c, 6c, 7c) aufweist.

10. Werkzeug nach Anspruch 9, dadurch gekennzeichnet, dass die den Dehnfugen (3a, 4a, 5a) unmittelbar benachbarten Bereiche der bearbeitungsseitigen Schneidkante (3c, 4c, 5c) in einem Winkel zueinander stehen.

11. Werkzeug nach Anspruch 10, dadurch gekennzeichnet, dass die den Dehnfugen (3a, 4a, 5a) unmittelbar benachbarten Bereiche der bearbeitungsseitigen Schneidkanten (3c, 4c, 5c) in einem stumpfen Winkel zur Werkzeugachse (Z) verlaufen.

12. Werkzeug nach Anspruch 9, dadurch gekennzeichnet, dass der Schneidkörper (6, 7) eine im Bereich der Dehnfugen (6a, 7a) abgesetzte bearbeitungsseitige Schneidkante (6c, 7c) aufweist.

13. Werkzeug nach Anspruch 12, dadurch gekennzeichnet, dass die bearbeitungsseitige Schneidkante (6c) durch axiale Stufen im Bereich der Dehnfugen (6a) abgesetzt ist.

14. Werkzeug nach Anspruch 12, dadurch gekennzeichnet, dass die bearbeitungsseitige Schneidkante (7c) unter Bildung gegenläufiger Winkel im Bereich der Dehnfugen (7a) abgesetzt ist.

15. Werkzeug nach einem der Ansprüche 1 bis 14, dadurch gekennzeichnet, dass der Schneidkörper (2, 3, 4, 5, 6, 7, 9, 10, 11) als Schneidplatte ausgebildet ist.

16. Werkzeug nach einem der Ansprüche 1 bis 14, dadurch gekennzeichnet, dass der Schneidkörper (8) als Kreuzschneide ausgebildet ist.

17. Werkzeug nach einem der Ansprüche 6 bis 16, dadurch gekennzeichnet, dass die einzelnen Abschnitte des Schneidkörpers (2, 3, 4, 5, 6, 7, 8, 9, 10, 11) eine unterschiedliche Materialbeschaffenheit aufweisen.

## Claims

1. Drilling and/or chiselling tool, in particular for working on concrete, rocks, brickwork and materials of this type, comprising a holding element (1) which is at the processing side provided with a cutting element (2, 3, 4, 5, 6, 7, 8, 9, 10, 11) of a hard metal, a hard material or the like and accommodated in a recess (1a), **characterised in that** the cutting element (2, 3, 4, 5, 6, 7, 8, 9, 10, 11) is designed to be in one piece and comprises for the purpose of division into individual sections at least one expansion gap (2a, 3a, 4a, 5a, 6a, 7a, 8a, 9a, 10a, 11a) which extends substantially along the length of the cutting element (2, 3, 4, 5, 6, 7, 8, 9, 10, 11) as measured parallel to the tool axis (Z).

2. Tool according to Claim 1, **characterised in that** the expansion gap (2a, 3a, 4a, 5a, 6a, 7a, 8a, 9a, 10a, 11a) is formed by a material narrowing with at least one remaining material web (2b, 3b, 4b, 5b, 6b, 7b, 8b, 9b, 10b, 11b).

3. Tool according to Claim 2, **characterised in that** there is a material web (2b) which extends substantially along the length of the cutting element (2) as measured parallel to the tool axis (Z).

4. Tool according to Claim 2, **characterised in that** there are at least two material webs (3b) spaced along the length of the cutting element (3) as measured parallel to the tool axis (Z).

5. Tool according to one of Claims 2 to 4, **characterised in that** the thickness of the material webs (2b, 3b, 4b, 5b, 6b, 7b, 8b, 9b, 10b, 11b) as measured vertically to the tool axis (Z) corresponds with approximately between 0.1 and 0.5 times the thickness of the cutting element (2, 3, 4, 5, 6, 7, 8, 9, 10, 11) as measured vertically to the tool axis (Z).

6. Tool according to one of Claims 1 to 5, **characterised in that** a plurality of expansion gaps (2a, 3a, 4a, 5a, 6a, 7a, 10a, 11a) is provided which divide the width of the cutting element (2, 3, 4, 5, 6, 7, 10, 11) as measured vertically to the tool axis (Z) into approximately equal sections.

7. Tool according to Claim 6, **characterised in that** two expansion gaps (2a, 3a, 4a, 5a, 6a, 7a, 10a, 11a) are provided for establishing three sections.

8. Tool according to Claim 7, **characterised in that** the middle section comprises a centring tip (2d, 3d, 4d, 5d, 6d, 7d, 10d, 11d).

9. Tool according to one of Claims 1 to 8, **characterised in that** the cutting element (2, 3, 4, 5, 6, 7) comprises a cutting edge (2c, 3c, 4c, 5c, 6c, 7c) on the processing side which changes at an obtuse angle into a centring tip (2d, 3d, 4d, 5d, 6d, 7d).

10. Tool according to Claim 9, **characterised in that** the areas of the cutting edge (3c, 4c, 5c) directly adjacent to the expansion gaps (3a, 4a, 5a) are placed at an angle relative to each other.

11. Tool according to Claim 10, **characterised in that** the areas of the cutting edges (3c, 4c, 5c) directly adjacent to the expansion gaps (3a, 4a, 5a) extend at an obtuse angle to the tool axis (Z).

12. Tool according to Claim 9, **characterised in that** the cutting element (6, 7) comprises a cutting edge (6c, 7c) on the processing side which is offset in the area of the expansion gaps (6a, 7a).

13. Tool according to Claim 12, **characterised in that** the cutting edge (6c) on the processing side is offset by axial steps in the area of the expansion gaps (6a).

14. Tool according to Claim 12, **characterised in that** the cutting edge (7c) on the processing side is offset by forming counter-directional angles in the area of the expansion gaps (7a).

15. Tool according to one of Claims 1 to 14, **characterised in that** the cutting element (2, 3, 4, 5, 6, 7, 8, 9, 10, 11) is designed as a cutting plate.

16. Tool according to one of Claims 1 to 14, **characterised in that** the cutting element (8) is designed as a cross-cutter.

17. Tool according to one of Claims 6 to 16, **characterised in that** the individual sections of the cutting element (2, 3, 4, 5, 6, 7, 8, 9, 10, 11) are of different material properties.

## Revendications

1. Outil de forage et/ou de burinage, en particulier pour le travail du béton, de la roche, de la maçonnerie et de matériaux analogues, comprenant un corps porteur (1) qui est pourvu, côté travail, d'un corps de coupe (2, 3, 4, 5, 6, 7, 8, 9, 10, 11) en métal dur, en substance dure ou analogue logé dans un évidement (la), caractérisé en ce que le corps de coupe (2, 3, 4, 5, 6, 7, 8, 9, 10, 11) est réalisé d'un seul tenant et comporte, pour le diviser en portions individuelles, au moins un joint de dilatation (2a, 3a, 4a, 5a, 6a, 7a, 8a, 9a, 10a, 11a) qui s'étend sensiblement le long de la longueur du corps de coupe (2, 3, 4, 5, 6, 7, 8, 9, 10, 11) mesurée parallèlement à l'axe d'outil (Z).

2. Outil selon la revendication 1, caractérisé en ce que le joint de dilatation (2a, 3a, 4a, 5a, 6a, 7a, 8a, 9a, 10a, 11a) est formé par un amincissement de matière avec au moins un pont de matière restant (2b, 3b, 4b, 5b, 6b, 7b, 8b, 9b, 10b, 11b).

3. Outil selon la revendication 2, caractérisé en ce qu'il comporte un pont de matière (2b) s'étendant sensiblement le long de la longueur du corps de coupe (2) mesurée parallèlement à l'axe d'outil (Z).

4. Outil selon la revendication 2, caractérisé en ce qu'il comporte au moins deux isthmes de matière (3b) répartis le long de la longueur du corps de coupe (3) mesurée parallèlement à l'axe d'outil (Z).

5. Outil selon l'une des revendications 2 à 4, caractérisé en ce que l'épaisseur des ponts de matière (2b, 3b, 4b, 5b, 6b, 7b, 8b, 9b, 10b, 11b) mesurée perpendiculairement à l'axe d'outil (Z) correspond sensiblement à 0,1 à 0,5 fois l'épaisseur du corps de coupe (2, 3, 4, 5, 6, 7, 8, 9, 10, 11) mesurée perpendiculairement à l'axe d'outil (Z).

6. Outil selon l'une des revendications 1 à 5, caractérisé en ce qu'il est prévu plusieurs joints de dilatation (2a, 3a, 4a, 5a, 6a, 7a, 10a, 11a) qui divisent en portions sensiblement égales la largeur du corps de coupe (2, 3, 4, 5, 6, 7, 10, 11) mesurée perpendiculairement à l'axe d'outil (Z).

7. Outil selon la revendication 6, caractérisé en ce qu'il est prévu deux joints de dilatation (2a, 3a, 4a, 5a, 6a, 7a, 10a, 11a) pour former trois portions.

8. Outil selon la revendication 7, caractérisé en ce que la portion centrale comporte une pointe de centrage (2d, 3d, 4d, 5d, 6d, 7d, 10d, 11d).

9. Outil selon l'une des revendications 1 à 8, caractérisé en ce que le corps de coupe (2, 3, 4, 5, 6, 7) comporte une arête de coupe côté travail (2c, 3c, 4c, 5c, 6c, 7c) qui se termine par une pointe de centrage (2d, 3d, 4d, 5d, 6d, 7d) en formant un angle obtus.

10. Outil selon la revendication 9, caractérisé en ce que les zones de l'arête de coupe côté travail (3c, 4c, 5c) immédiatement voisines des joints de dilatation (3a, 4a, 5a) forment un angle entre elles.

11. Outil selon la revendication 10, caractérisé en ce que les zones des arêtes de coupe côté travail (3c, 4c, 5c) immédiatement voisines des joints de dilatation (3a, 4a, 5a) s'étendent selon un angle obtus par rapport à l'axe d'outil (Z).

12. Outil selon la revendication 9, caractérisé en ce que le corps de coupe (6, 7) comporte une arête de coupe côté travail (6c, 7c) qui est décalée dans la zone des joints de dilatation (6a, 7a).

13. Outil selon la revendication 12, caractérisé en ce que l'arête de coupe côté travail (6c) est décalée par la présence d'étages axiaux dans la zone des joints de dilatation (6a).

14. Outil selon la revendication 12, caractérisé en ce que l'arête de coupe côté travail (7c) est décalée en formant des angles opposés dans la zone des joints de dilatation (7a).

15. Outil selon l'une des revendications 1 à 14, caractérisé en ce que le corps de coupe (2, 3, 4, 5, 6, 7, 9, 10, 11) est conçu sous la forme d'une plaquette de coupe.

16. Outil selon l'une des revendications 1 à 14, caractérisé en ce que le corps de coupe (8) est conçu sous la forme d'un taillant en croix.

17. Outil selon l'une des revendications 6 à 16, caractérisé en ce que les matériaux des portions individuelles du corps de coupe (2, 3, 4, 5, 6, 7, 8, 9, 10, 11) présentent des propriétés différentes.
